# EUROPÄISCHE PATENTSCHRIFT

(11) **EP 0 560 314 B1**
(45) Veröffentlichungstag und Bekanntmachung des Hinweises auf die Patenterteilung: **27.12.1996**
(21) Anmeldenummer: 93103820.2
(22) Anmeldetag: 10.03.1993
(51) Int. Cl.: H04N 7/18, B61L 15/00

(54) **Überwachungsanlage mit Infrarotbildübertragung**
Monitoring installation with infrared image transmission
Installation de surveillance à transmission d'image utilisant des ondes infrarouges

(30) Priorität: 11.03.1992 DE 4207688
(43) Veröffentlichungstag der Anmeldung: 15.09.1993
(73) Patentinhaber: GRUNDIG E.M.V. Elektro-Mechanische Versuchsanstalt Max Grundig GmbH & Co. KG, D-90762 Fürth (DE)
(72) Erfinder: Rumland, Rainer, Dipl.-Ing., c/o GRUNDIG E.M.V., W-8510 Fürth/Bay. (DE); Schlenk, Gerhard, c/o GRUNDIG E.M.V., W-8510 Fürth/Bay. (DE)

(56) Entgegenhaltungen:
- DE-A- 1 947 743
- DE-A- 2 934 598
- US-A- 4 807 027
- SIEMENS POWER ENGINEERING Bd. 1, Nr. 7, Juli 1979, BERLIN, DE Seiten 209 - 213 RAVEN ET AL 'Cableless Television Monitoring in the Amsterdam Metro'
- PATENT ABSTRACTS OF JAPAN vol. 16, no. 297 (E-1226) 30. Juni 1992 & JP-A-40 79 480
- PATENT ABSTRACTS OF JAPAN vol. 13, no. 246 (E-769) 8. Juni 1989 JP-A-10 46 389
- ELEKTRISCHE BAHNEN Bd. 89, Nr. 11, November 1991, MUENCHEN, DE Seiten 147 - 151 H. POSS 'SITRAIL Fernsehinformationssystem fuer Zuege mit drahtloser Fernsehbilduebertragung'

## Beschreibung

Die Erfindung betrifft eine Überwachungsanlage mit einer oder mehreren Fernsehkameras, die entlang einer Fahrstrecke angeordnet sind, und einem oder mehreren Monitoren zur Darstellung der aufgenommenen Bildsignale.

Derartige Anlagen werden beispielsweise zur Überwachung von Bahnhöfen, insbesondere zur Überwachung der Bahnsteige vor der Einfahrt des Zuges bzw. vor und während der Abfahrt des Zuges, eingesetzt. Bei bekannten Anlagen werden zu diesem Zweck eine oder mehrere Fernsehkameras so angebracht, daß der gesamte Bahnsteig erfaßt wird. Mit diesen Kameras sind über leitungsgebundene Signalübertragungsstrecken Fernsehmonitore verbunden, auf denen die aufgenommenen Bilder dargestellt werden. Die Monitore sind fest an einem Ort installiert, der so gewählt ist, daß der Zugführer diese Monitore während des Aufenthaltes des Zuges einsehen kann. Vor der Abfahrt kann der Zugführer überprüfen, ob sich noch jemand im Einstiegsbereich des Zuges aufhält und zu einem späteren Zeitpunkt, ob alle Türen geschlossen sind.

Derartige Anlagen haben den Nachteil, daß die Monitore, die im Bahnhofsbereich installiert sind, in vielen Fällen durch Vandalismus beschädigt werden oder die Bildfläche mit Farbe übersprüht wird. Ein weiterer Nachteil bei fest installierten Monitoren ergibt sich dadurch, daß der Zugführer nur bei stehendem Zug den Bahnsteig überwachen kann. Personen, die sich während der Abfahrt des Zuges in eine Gefahrenzone begeben, können nicht erfaßt werden. Weiterhin kann es als nachteilig angesehen werden, daß die Übertragungsverbindungen fest installiert sind und somit nicht schnell und flexibel auf geänderte Anforderungen eingegangen werden kann.

Aus diesem Grund erfolgt die Signalübertragung häufig mittels einer leitungsungebundenen Übertragungsstrecke, wie es beispielsweise aus der deutschen Offenlegungsschrift DE-A-19 47 743 bekannt ist.
Bei dieser übertragungsstrecke wird der Sender, der die Bildsignale, welche von der oder den Fernsehkameras aufgenommen werden, aussendet, stationär an einer Wegstrecke angeordnet. Die entsprechenden Empfänger sind am beweglichen Fahrzeug, beispielsweise am Zug, angeordnet.
Bei diesen bekannten Anordnungen wird jeweils nur ein Bildsignal übertragen, was aber beispielsweise für die Überwachung eines Bahnhofes nicht ausreicht.

Aus der deutschen Offenlegungsschrift DE 29 34 598 A1 ist in diesem Zusammenhang ein Fernsehsystem bekannt, bei dem mittels leitungsgebundener Übertragung von mehreren Fernsehkameras einem oder mehreren Auswertegeräten die aufgenommenen Bilder zugeführt werden.
Dabei ist den Kameras ein Multiplexer nachgeschaltet, der die Videosignale der Kameras im Zeitmultiplex bildweise auf ein Aufzeichnungsgerät schaltet.
Um bei der Auswertung einen wahlweisen Zugriff auf die Bilder der einzelnen Kameras zu erhalten, wird in den Signalweg zwischen den Kameras und dem Aufzeichnungsgerät eine Kennungssignalgeberanordnung geschaltet, die in die von jeder Kamera abgegebenen Videosignale ein die jeweilige Kamera kennzeichnendes Kennsignal einfügt.
Wiedergabeseitig werden diese Kennsignale ausgewertet, um die Wiedergabe von Bildern zu ermöglichen, die von einer einzigen Kamera aufgenommen wurden.
Auch bei dieser Anordnung besteht zunächst der Nachteil, daß die Bildübertragung leitungsgebunden erfolgt und somit fest installierte Übertragungsverbindungen aufweist. Darüberhinaus sind keine Maßnahmen im Hinblick auf eine gute Übertragungsqualität angegeben.

Es stellt sich deshalb die Aufgabe eine Überwachungsanlage anzugeben, bei der die Übertragung mehrerer Bildsignale möglich ist, ohne auf eine ausreichend gute Übertragungsqualität verzichten zu müssen.

Diese Aufgabe wird gemäß der Erfindung gelöst, indem die Bildübertragung im Multiplexbetrieb erfolgt, wobei senderseitig mindestens einem der Bilder ein Kennsignal zugefügt wird, das die Zuordnung der Bildsignale zu den einzelnen Kameras angibt und empfängerseitig im Demultiplexer, der mindestens einen Bildspeicher enthält, das Kennsignal bzw. die Kennsignale ausgewertet werden und die Zuordnung der Bildsignale zu den jeweiligen Monitoren bestimmt. Das empfangene Bildsignal wird gleichzeitig auf seine Qualität hin überprüft und bei mangelhafter Qualität wird das zuletzt mit guter Qualität empfangene Bildsignal auf dem Monitor dargestellt.

Die erfindungsgemäße Anordnung hat den Vorteil, daß die Überwachung beispielsweise eines Bahnsteiges bei der Einfahrt, während des Aufenthaltes und bei der Abfahrt aus der Sicht mehrerer Kameras überwacht werden kann. Weiterhin sind die teuren und oft beschädigten Monitore im Zug installiert, so daß sie vor mutwilligen Beschädigungen sicher sind.

Eine vorteilhafte Ausgestaltung der Erfindung sieht vor, daß der Demultiplexer eine der Anzahl der Übertragungskanäle entsprechende Anzahl von Bildspeichern, in die das in einem ersten Bildspeicher befindliche Bild bei guter Qualität übertragen wird, enthält. Der Demultiplexer enthält am Eingang den ersten Bildspeicher, der das vom Empfänger erhaltene Bild abspeichert, und eine Signalanlyseeinheit, welche das eingehende Bildsignal auf seine Qualität hin überprüft und das übertragene Kennsignal auswertet.

Ein vorteilhafte Ausgestaltung der Signalanalyse ergibt sich, wenn die Fehlerrate des Synchronrahmens zur Beurteilung der Bildqualität herangezogen wird. Auf diese Art wird der Aufwand für die Beurteilung der Bildqualität gering gehalten.

In einer vorteilhaften Ausgestaltung der Erfindung wird vorgesehen, daß die Bildwiedergabe auf dem oder den Monitoren abgeschaltet wird, wenn innerhalb einer vorgegebenen Zeitspanne zwischen dem zuletzt mit guter Qualität empfangenen Bildsignal und dem aktuell empfangenen Bildsignal mit schlechter Qualität kein Bildsignal mit ausreichender Qualität empfangen wird.

Mit einer derartigen Weiterführung der Erfindung wird erreicht, daß kurze Zeit nach Verlassen des Empfangsbereiches des Senders der Monitor automatisch abgeschaltet wird und beispielsweise der Zugführer nicht unnötig lange Zeit von seiner Fahrstrecke abgelenkt wird.

In einer weiteren vorteilhaften Ausgestaltung der Erfindung ist der Empfänger im Fahrzeug und die Bildauswerteeinheit ständig in Betriebszustand und bei Empfang eines Bildsignales mit ausreichender Bildqualität wird am Monitor automatisch das empfangene Bildsignal angezeigt. Auch bei dieser Ausführungsform wird beispielsweise der Zugführer entlastet, indem er nicht seine Aufmerksamkeit auf das Einschalten der Monitore richten muß. Ein Signalton kann das Vorliegen eines Eingangssignales anzeigen.

Ein anderer Vorteil ergibt sich, wenn entlang der Fahrstrecke mehrere Sender angebracht sind, wobei diese Sender untereinander durch Übertragungsmittel verbunden sind und allen Sendern im Gleichtaktbetrieb das gleiche Signal zugeführt wird. Auf diese Weise können bereits im Einfahrtsbereich, beispielsweise eines Bahnhofes, ein oder mehrere Sender angebracht seine so daß der Zugführer bereits dort die Situation am Bahnsteig überblicken und somit seine Geschwindigkeit auf diese Situation abstimmen kann. Ebenso können im Ausfahrtsbereich Sender angebracht sein, so daß auch während der Abfahrt noch überprüft werden kann, ob alle Türen geschlossen sind oder sich niemand im Gefahrenbereich aufhält bzw. in den Gefahrenbereich eindringt.

Eine weitere vorteilhafte Ausgestaltung der Erfindung ergibt sich, wenn die Fernsehkameras zumindest teilweise paarweise zusammengefaßt werden und ihre Bildsignale in der Weise gemischt werden, daß jeweils die erste Hälfte einer Bildzeile mit dem Bildsignal der ersten Kamera und die zweite Hälfte mit dem Bildsignal der zweiten Kamera belegt wird.
Auf diese Weise läßt sich die Zahl der Monitore verringern.

Weiterhin ist es vorteilhaft, auch im Fahrzeug Sendeelemente und stationär Empfangselemente anzubringen. Auf diese Weise können auch in umgekehrter Richtung vom Fahrzeug aus Signale übertragen werden.

Im folgenden wird die Erfindung an Hand der Figuren näher erläutert, wobei hier ohne Beschränkung der Allgemeinheit auf Infrarotübertragung Bezug genommen wird.

Es zeigen:
Figur 1a das Blockschaltbild einer erfindungsgemäßen Überwachungsanlage,
Figur 1b eine Ausführungsform des Demultiplexers,
Figur 1c das Blockschaltbild zweier miteinander durch Lichtwellenleiter verbundener Infrarotsender, und
Figur 2 die Überwachungsanlage am Beispiel eines Bahnhofes.

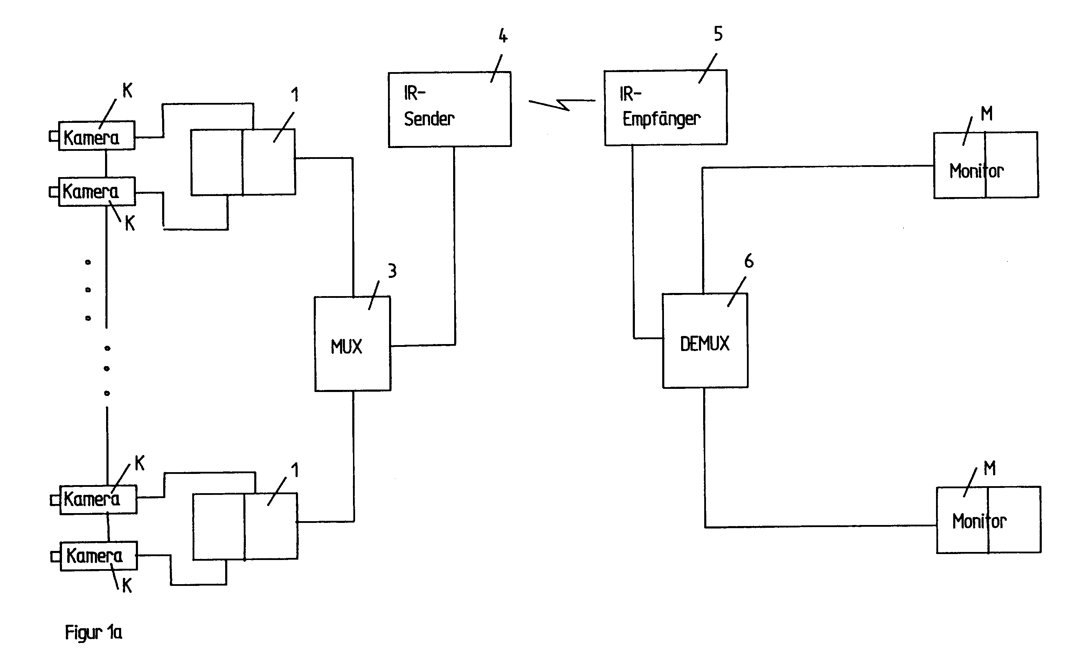

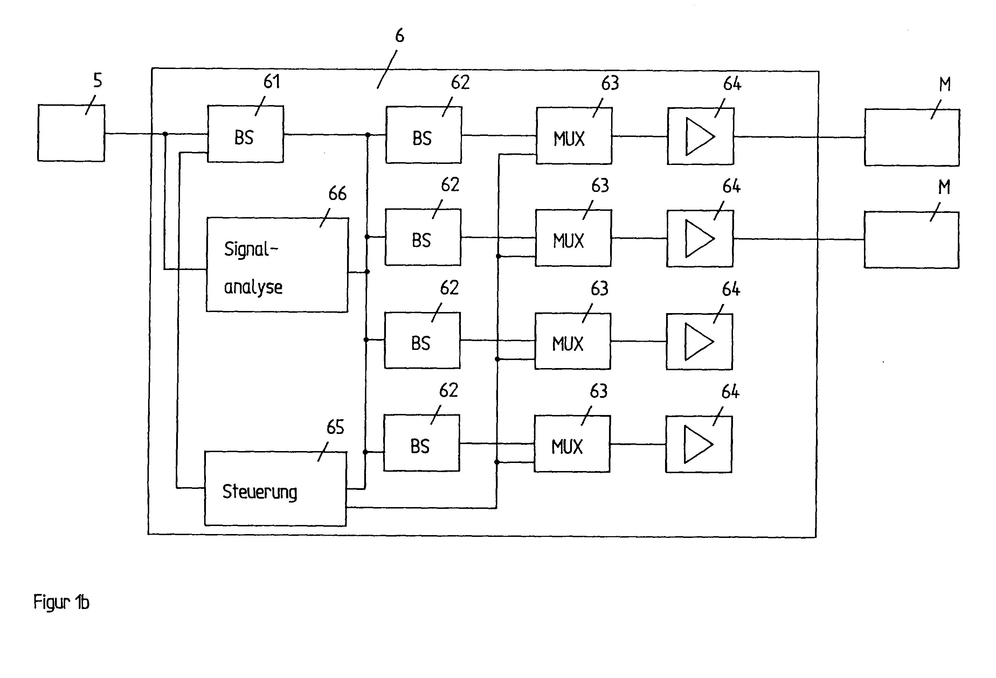

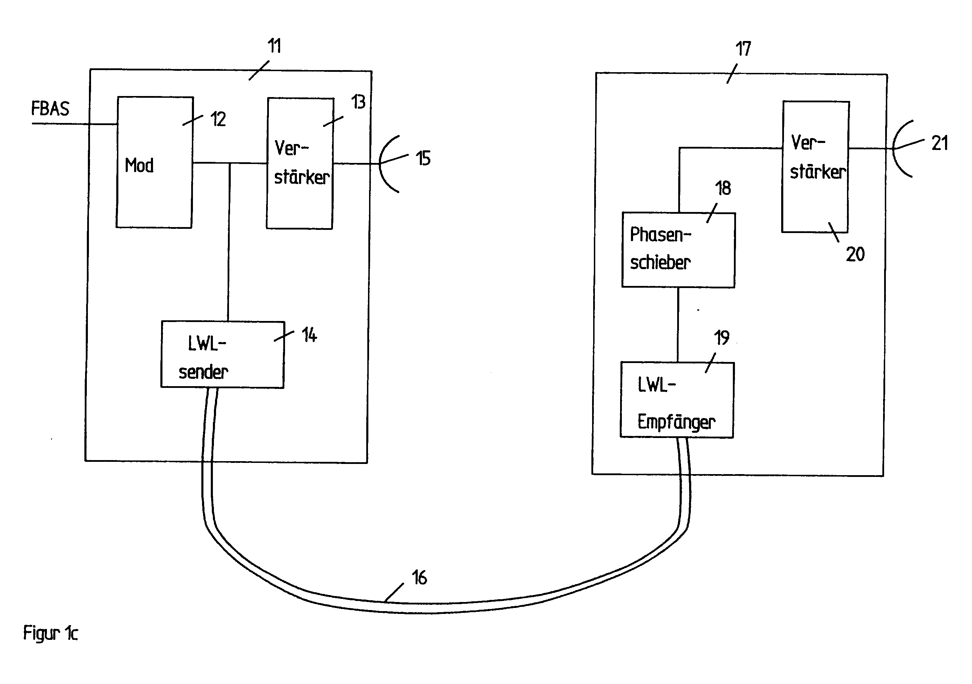

In Figur 1a ist das Blockschaltbild einer möglichen Ausführungsform der Erfindung angegeben. Diese Figur enthält die Fernsehkameras K, die mit Synchronisationsleitungen untereinander verbunden sind.
Im dargestellten Fall sind jeweils die Kameras K paarweise zusammengefaßt und mit Signalverarbeitungseinheiten 1, die unter anderem Schnittbildeinrichtungen enthalten, verbunden. In diesen Schnittbildeinrichtungen 1 werden die Bildsignale der beiden angeschlossenen Kameras K miteinander in der Weise gemischt, daß jeweils die erste Hälfte einer Zeile mit dem Bildsignal einer ersten Kamera und die zweite Hälfte mit dem Bildsignal einer zweiten Kamera beschrieben wird. Bei nicht paarweise zusammengefaßten Kameras K entfallen diese Schnittbildeinrichtungen 1.
Im weiteren werden die Fernsehsignale an den Multiplexer 3 gegeben, der im Zeitmultiplex zyklisch die anliegenden Fernsehsignale an den Infrarotsender 4 weitergibt.
Im Multiplexer 3 wird zumindest einem der einzelnen Fernsehsignale auch ein Kennsignal beigefügt, welches eine Zuordnung zur Aufnahmekamera angibt.

Im Sender 4, der vorzugsweise ein Infrarotsender ist, werden die Signale ausgesendet. Vom Empfänger 5, der vorzugsweise ein Infrarotempfänger ist, werden die Signale empfangen. Mit dem Infrarotempfänger 5 ist ein Demultiplexer 6 verbunden, der die Signale in die gleiche Reihenfolge, in der sie gesendet wurden, aufteilt, wobei dies unter Auswertung der Kennsignale erfolgt, wenn diese Kennsignale im Multiplexer 3 erzeugt und gesendet werden. Entsprechend dieser Reihenfolge bzw. Zuordnung zu den Kameras werden die Signale an die Monitore M gegeben.

In Figur 1b ist eine mögliche Ausführungsform des Demultiplexers 6 auf der Empfängerseite dargestellt. Der Demultiplexer 6 besteht aus einem Bildspeicher 61, der das vom Empfänger 5 erhaltene Bild abspeichert. Er enthält weiterhin eine Signalanlyseeinheit 66, welche das eingehende Bildsignal auf seine Qualität hin überprüft und das übertragene Kennsignal auswertet. Eine der Anzahl der Übertragungskanäle entsprechende Anzahl von Bildspeichern 62, in die das im Bildspeicher 61 befindliche Bild bei guter Qualität übertragen wird, dient zur Zwischenspeicherung der empfangenen Bilder unter Zuordnung zu einem Monitor M.
Die Steuereinheit 65 nimmt die Ablaufsteuerung vor. Sie fügt insbesondere über die Multiplexer 63 den aus den Bildspeichern 62 ausgelesenen Bildinformationen einen Synchronrahmen zu. Die gesamte Bildinformation mit dem Synchronrahmen wird über die Bildverstärker 64 an die Monitore M gegeben, von denen in der Figur nur zwei dargestellt sind.

In der Signalanalyseeinheit 66 wird der eingehende Synchronrahmen oder der Bildinhalt des im Bildspeicher 61 abgelegten Eingangsbildes auf seine Qualität hin überprüft. Bei Vorliegen einer nicht ausreichenden Bildqualität wird das zuletzt in einem der Bildspeicher 62 abgelegte Bild an den entsprechenden Monitor gegeben.

In Figur 1c ist eine Ausführungsart 11,17 des bzw. der Infrarotsender 4 angegeben. In dieser Figur ist ein erster Sender 11 und ein zweiter Sender 17 dargestellt, wobei in einer Anordnung mit mehreren Sendern, die das gleiche Fernsehsignal abgeben, die weiteren Sender in gleicher Weise wie Sender 17 aufgebaut und angeschlossen werden.

Der Sender 11 enthält einen Modulator 12, eine Signalverstärkerstufe 13, an die das Sendeelement 15 angeschlossen ist und einen Lichtwellenleitersender 14, der ebenfalls mit dem Modulator 12 verbunden ist und sein Signal in den Lichtwellenleiter 16 einspeist.
Der Modulator 12 erhält ein FBAS - Signal, das vorzugsweise frequenz- oder pulsmoduliert wird. Das modulierte Signal wird an die Signalverstärkerstufe 13 und an den Lichtwellenleitersender 14 gegeben, wobei eine Vorverstärkeranordnung bereits im Modulator 12 enthalten sein kann, und die Signalverstärkerstufe 13 und der Lichtwellenleitersender 14 lediglich einen Endverstärker enthalten, der an die jeweils notwendige Sendeleistung angepaßt ist.

Der Empfänger 17 erhält ein bereits aufgearbeitetes Signal, das über den Lichtwellenleiter 16 an den Lichtwellenleiterempfänger 19 geführt wird. Der Lichtwellenleiterempfänger ist mit dem Phasenschieber 18 verbunden, der eventuelle Laufzeitunterschiede ausgleicht. Das so veränderte Signal wird an die Verstärkerstufe 20 gegeben und über das Sendeelement 21 ausgesendet.

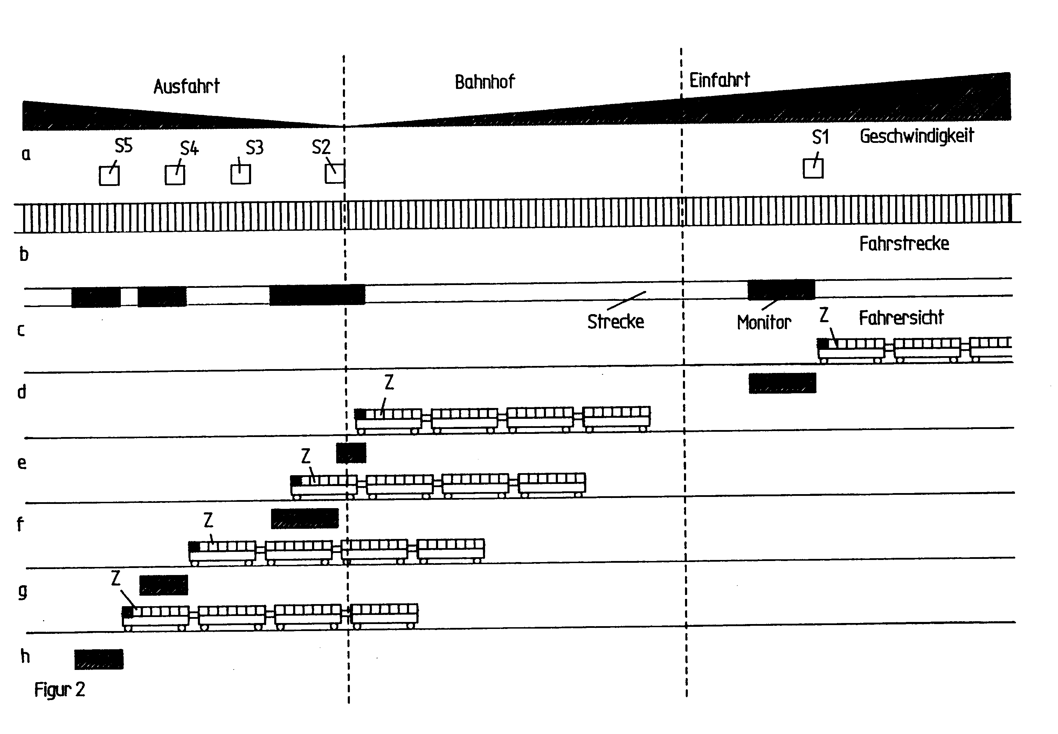

In den Figuren 2a bis 2h wird der Einsatz einer erfindungsgemäßen Überwachungsanlage am Beispiel eines Bahnhofes erläutert.
Figur 2a zeigt ein Geschwindigkeitsdiagramm für die Bereiche der Einfahrt des Bahnhofes, des Bahnhofes selbst und der Bahnhofsausfahrt. Das Diagramm zeigt die Situation aus der Sicht der Lokomotive, d.h. am Bahnhofsende wird die Geschwindigkeit Null sein, der Zug also stehen und von dort wieder beschleunigen.
In der Figur 2b ist die Anordnung der Infrarotsender S1 bis S5 beispielhaft dargestellt und in Figur 2c sind die Streckenabschnitte dargestellt, in denen der Zugführer auf die Strecke bzw. auf den Monitor sieht.
Die Figuren 2d bis 2h zeigen die Fahrersicht noch einmal mit Angabe der Stellung des Zuges.
Bei der Einfahrt in den Bahnhof ist zunächst der erste Sender S1 angeordnet. Auf diese Weise kann der Zugführer bereits während der Abbremsphase in der Bahnhofseinfahrt kurzzeitig die Situation am Bahnsteig beobachten und die Einfahrtsgeschwindigkeit dieser Situation anpassen.
Danach kann er sich wieder auf die Strecke konzentrieren. Nachdem der Zug angehalten hat, kann der Zugführer den Bahnsteig beobachten; die entsprechenden Signale werden vom Sender S2 erhalten. Dies ist insbesondere vor dem Zeitpunkt der Abfahrt notwendig, um sich einen Überblick zu verschaffen, ob die Türen geschlossen sind und sich niemand mehr im Gefahrenbereich des Zuges aufhält. Auch während der Abfahrt, kann der Zugführer noch die Situation am Bahnsteig, bzw. im Vorbeifahren die Türen der Waggons überprüfen. Die Signale werden hierbei vom Sender S2 bzw. S3 und den Sendern S4 und S5 erhalten.

Durch eine derartige Überwachungsanlage an einem Bahnhof kann insbesondere die Sicherheit während des Einfahrens eines Zuges und bei der Abfahrt erhöht werden, da die Überwachung auf Monitor nicht mehr von fest installierten Monitoren am Bahnhof, die nur während des Anhaltens betrachtet werden können, abhängig ist.

Hierbei kann es vorteilhaft sein, entsprechend der Anforderung an die Überwachung ein Standbild oder ein Bewegtbild zu übertragen. Insbesondere bei der Übertragung während des Aufenthaltes und der Abfahrt des Zuges wird günstigerweise ein Bewegtbild übertragen, während im Einfahrtsbereich die Situation am Bahnsteig auch durch ein Standbild erfasst werden kann.

## Patentansprüche

1. Überwachungsanlage mit einer oder mehreren Fernsehkameras(K), mit einer Signalverarbeitungseinheit (1) zur Verarbeitung der von der oder den Fernsehkameras (K) aufgenommenen Bildsignale, mit einer leitungsungebundenen Bildübertragungsstrecke, bei der die Sendeelemente (4), die zur Bildübertragung dienen, stationär und die Empfangselemente (5) beweglich in einem Fahrzeug angebracht sind, und einem oder mehreren Monitoren (M) zur Anzeige der aufgenommenen Bilder,
**dadurch gekennzeichnet,** daß
- die Bildübertragung im Multiplexbetrieb erfolgt,
wobei senderseitig in einem Multiplexer (3) einem oder mehreren Bildern ein Kennsignal zugefügt wird, das die Zuordnung der Bildsignale zu einer Kamera angibt, und
empfängerseitig im Demultiplexer (6) die Kennsignale für die Zuordnung der Bildsignale zu den Monitoren ausgewertet werden,
- das empfangene Bildsignal ständig auf seine Qualität hin überprüft wird und bei mangelhafter Qualität das zuletzt mit guter Qualität empfangene Bildsignal auf dem Monitor (M) dargestellt wird.

2. Überwachungsanlage nach Anspruch 1, **dadurch gekennzeichnet**, daß
der Demultiplexer (6)
- einen Bildspeicher (61) enthält, der das vom Empfänger (5) erhaltene Bild abspeichert,
- eine Signalanlyseeinheit (66) enthält, welche das eingehende Bildsignal auf seine Qualität hin überprüft und das übertragene Kennsignal auswertet,
- eine der Anzahl der Übertragungskanäle entsprechende Anzahl von Bildspeichern (62) enthält, in die das im Bildspeicher (61) befindliche Bild bei guter Qualität übertragen wird.

3. Überwachungsanlage nach Anspruch 1 oder Anspruch 2, **dadurch gekennzeichnet,** daß in der Signalanalyseeinheit (66) die Fehlerrate des Synchronrahmens zur Beurteilung der Bildqualität ausgewertet wird.

4. Überwachungsanlage nach einem oder mehreren der Ansprüche 1 bis 3, **dadurch gekennzeichnet**, daß die Anzeige auf dem oder den Monitoren (M) abgeschaltet wird, wenn innerhalb einer vorgebbaren Zeitspanne nach dem zuletzt mit guter Qualität empfangenen Bildsignal kein Bildsignal mit ausreichender Qualität empfangen wird.

5. Überwachungsanlage nach einem oder mehreren der Ansprüche 1 bis 4, **dadurch gekennzeichnet**, daß
- entlang der Fahrstrecke mehrere Infrarotsender (4,11,17) angebracht sind,
- diese Sender (4,11,17) untereinander durch leitungsgebundene Übertragungsmittel verbunden sind, und
- allen Sendern (4,11,17)das gleiche Bildsignal zugeführt wird.

6. Überwachungsanlage nach einem oder mehreren der Ansprüche 1 bis 5, **dadurch gekennzeichnet**, daß die Fernsehkameras (K) zumindest teilweise paarweise zusammengefaßt werden und ihre Bildsignale so gemischt werden, daß jeweils die erste Hälfte einer Bildzeile mit dem Bildsignal der ersten Kamera und die zweite Hälfte mit dem Bildsignal der zweiten Kamera belegt wird.

7. Überwachungsanlage nach einem oder mehreren der Ansprüche 1 bis 6, **dadurch gekennzeichnet**, daß je nach Anforderung Standbilder oder Bewegtbilder übertragen werden.

8. Überwachungsanlage nach einem oder mehreren der Ansprüche 1 bis 7, **dadurch gekennzeichnet**, daß Sendeelemente beweglich an einem Fahrzeug und Empfangselemente stationär angebracht sind, um auch Signale vom Fahrzeug aus übertragen zu können.

## Claims

1. A surveillance system having one or more television cameras (K), with a signal processing unit (1) for processing the video signals picked up by the television camera or cameras (K), with a non line-type video transmission path in which the transmitting elements (4) used for the video transmission are stationary and the receiving elements (5) are mobile and are placed in a vehicle, and having one or more monitors (M) for displaying the recorded images, **characterised in that**
- the video transmission is effected by means of multiplex,
whereby at the transmitting end an identification signal which specifies the allocation of the video signals to a camera is added to one or more images in a multiplexer (3), and
at the receiving end the identification signals for allocating the video signals to the respective monitors are evaluated in the demultiplexer (6),
- the received video signal is continuously checked for quality and if the quality is poor, the video signal last received with good quality is displayed on the monitor (M).

2. Surveillance system according to Claim 1, **characterised in that**
the demultiplexer (6) contains
- an image memory (61) which stores the image obtained from the receiver (5),
- a signal analysis unit (66) which checks the quality of the incoming video signal and evaluates the transmitted identification signal,
- a number of image memories (62) corresponding to the number of transmission channels, in which the image in the image memory (61) is transmitted with good quality.

3. Surveillance system according to Claim 1 or Claim 2, **characterised in that** in the signal analysis unit (66) the error rate of the synchronizing frame is evaluated to assess the image quality.

4. Surveillance system according to one or more of Claims 1 to 3, **characterised in that** the display on the monitor or monitors (M) is switched off if no video signal of sufficient quality is received within a predetermined time period following the last video signal received with good quality.

5. Surveillance system according to one or more of Claims 1 to 4, **characterised in that**
- several infrared transmitters (4, 11, 17) are placed along the track,
- these transmitters (4, 11, 17) are interconnected by line-type transmission means, and
- the same video signal is fed to all transmitters (4, 11, 17).

6. Surveillance system according to one or more of Claims 1 to 5, **characterised in that** at least some of the television cameras (K) are combined in pairs and their video signals are mixed so that the first half of a scanning line is occupied by the video signal of the first camera and the second half is occupied by the video signal of the second camera.

7. Surveillance system according to one or more of Claims 1 to 6, **characterised in that** freeze-frame pictures or moving pictures are transmitted as required.

8. Surveillance system according to one or more of Claims 1 to 7, **characterised in that** mobile transmitting elements are placed on a vehicle and stationary receiving elements are installed to allow signals to be transmitted from the vehicle as well.

## Revendications

1. Installation de surveillance comportant une ou plusieurs caméras de télévision (K) possédant une unité (1) de traitement de signaux pour le traitement de signaux d'image enregistrés par la ou les caméras de télévision (K), une section sans fil de transmission d'images, et dans laquelle les éléments d'émission (4), qui servent à la transmission d'images, sont disposés de façon fixe et les éléments de réception (5) sont disposés de manière à être mobiles dans un véhicule, et un ou plusieurs moniteurs (M) pour l'affichage des images enregistrées,
caractérisée en ce que
- la transmission de l'image s'effectue dans le fonctionnement multiplex, auquel cas
côté émission dans un multiplexeur (3), un signal caractéristique, qui indique l'association des signaux d'image à une caméra, est ajouté à un ou plusieurs images, et
côté réception dans un multiplexeur (6), les signaux caractéristiques pour l'association des signaux d'image aux moniteurs sont évalués,
- la qualité du signal d'image reçu est contrôlée en permanence et, dans le cas d'une baisse de la qualité, le signal d'image reçu en dernier lieu avec une bonne qualité est représenté sur le moniteur (M).

2. Installation de surveillance selon la revendication 1, caractérisée en ce que le démultiplexeur (6) contient
- une mémoire d'images (61), qui mémorise l'image délivrée par le récepteur (5),
- une unité (66) d'analyse des signaux, qui contrôle la qualité du signal d'image arrivant et évalue le signal caractéristique transmis,
- un nombre qui correspond au nombre des canaux de transmission, de mémoires d'images (62), dans lesquelles l'image située dans la mémoire d'images (61) est transférée avec une bonne qualité.

3. Installation de surveillance selon la revendiction 1 ou 2, caractérisée en ce que dans l'unité (66) d'analyse des signaux, le taux d'erreurs de la trame de synchronisation est évaluée pour l'évaluation de la qualité de l'image.

4. Installation de surveillance selon une ou plusieurs des revendications 1 à 3, caractérisée en ce que l'affichage sur le ou les moniteurs (M) est interrompu lorsque pendant un intervalle de temps pouvant être prédéterminé après le signal d'image reçu en dernier lieur avec une bonne qualité, aucun signal d'image ayant une qualité suffisante n'est reçu.

5. Installation de surveillance selon une ou plusieurs des revendications 1 4, caractérisée en ce que
- plusieurs émetteurs à infrarouge (4,11,17) sont disposés le long de la section de passage, ces émetteurs (4,11,17) sont reliés entre eux par des moyens de transmission câblés, et
- le même signal d'image est envoyé à tous les émetteurs (4,11,17).

6. Installation de surveillance selon une ou plusieurs des revendications 1 à 5, caractérisée en ce que les caméras de télévision (K) sont réunies au moins en partie par couples et leurs signaux d'images sont mélangés de telle sorte que respectivement la première moitié d'une ligne d'image est occupée par le signal d'image de la première caméra et la seconde moitié est occupée par le signal d'image de la seconde caméra.

7. Installation de surveillance selon une ou plusieurs des revendications 1 à 6, caractérisée en ce que'en fonction des exigences, des images fixes our des images mobiles sont transmises.

8. Installation de surveillance selon une ou plusieurs des revendications 1 à 7, caractérisée en ce que les éléments d'émission sont disposés de façon mobile sur un véhicule et que des éléments de réception sont disposés de façon fixe pour pouvoir exécuter la transmission également de signaux à partir du véhicule.
